# EUROPÄISCHE PATENTSCHRIFT

(11) **EP 2 413 218 B1**
(45) Veröffentlichungstag und Bekanntmachung des Hinweises auf die Patenterteilung: **27.09.2017**
(21) Anmeldenummer: 11174703.6
(22) Anmeldetag: 20.07.2011
(51) Int. Cl.: G06F 3/01

(54) **Feedback-Gerät**
Feedback device
Appareil de génération d'information en retour

(30) Priorität: 29.07.2010 DE 102010032706
(43) Veröffentlichungstag der Anmeldung: 01.02.2012
(73) Patentinhaber: Deutsches Zentrum für Luft- und Raumfahrt e.V., 51147 Köln (DE)
(72) Erfinder: Ende, Tobias, 80796 München (DE); Preusche, Carsten, 81379 München (DE); Schätzle, Simon, 82110 Germering (DE); Wüsthoff, Tilo, 81371 München (DE)
(74) Vertreter: dompatent von Kreisler Selting Werner - Partnerschaft von Patent- und Rechtsanwälten mbB

(56) Entgegenhaltungen:
- US-A- 3 203 200
- US-B2- 7 337 810
- TSETSERUKOU D ET AL: "Efficient object exploration and object presentation in TeleTA, Teleoperation system with Tactile feedback", EUROHAPTICS CONFERENCE, 2009 AND SYMPOSIUM ON HAPTIC INTERFACES FOR VIRTUAL ENVIRONMENT AND TELEOPERATOR SYSTEMS. WORLD HAPTICS 2009. THIRD JOINT, IEEE, PISCATAWAY, NJ, USA, 18. März 2009 (2009-03-18), Seiten 97-102, XP031446889, ISBN: 978-1-4244-3858-7

## Beschreibung

Die vorliegende Erfindung betrifft ein Feedback-Gerät, insbesondere für Virtual Reality, zur Anbringung an Körperteilen des menschlichen Körpers, vorzugsweise ein vibrotaktiles Feedback-Gerät.

Feedback-Geräte, wie beispielsweise vibrotaktile Feedback-Geräte, verbessern die intuitive Wahrnehmung und Interaktion bei Virtual Reality Szenarien sowie bei Telemanipulation.

Aus "D. Tsetserukou und S. Tachi: Efficient Object Exploration and Object Presentation in TeleA, Teleoperation System with Tactile Feedback Proceedings of Worldhaptics, Salt Lake City, USA, 2009" ist ein sogenanntes taktiles Display "Bra Tact" bekannt, das mehrere vibrotaktile Feedbackmodule aufweist, die zu einem Armband zusammengeführt sind. Dabei sind die einzelnen Feedbackmodule mit einem breiten elastischen Band miteinander verbunden.

Derartige Feedback-Geräte dienen dazu, Vibrationsstimuli auf der Haut des Benutzers zu erzeugen. Solche Stimuli werden unter anderem dazu eingesetzt, um Kollisionen mit virtuellen oder entfernten Objekten auf dem realen Arm des Benutzers des Virtual Reality Systems darzustellen.

Bei dem vorbekannten Feedback-Gerät hat sich der Nachteil herausgestellt, dass die einzelnen Feedbackmodule derart an dem elastischen Band befestigt sind, dass bei der Dehnung der elastischen Bänder unterschiedliche Abstände zwischen den einzelnen Feedbackmodulen entstehen können, so dass nach Anlegen des Bandes die Positionen der Feedbackmodule angepasst werden müssen. Ferner ist von Nachteil, dass die Verkabelung der einzelnen Feedbackmodule nach dem Anlegen des Gerätes erfolgt und somit ein großer Aufwand bei dem Anlegen des Gerätes notwendig ist.

Aus US 3 203 200 A ist ein elastisches Band mit einer Zick-Zack-förmigen Struktur aus Drahtfedern bekannt, das beispielsweise für Armbänder von Uhren verwendet werden kann.

Darüber hinaus muss das Gerät zum Anlegen an beispielsweise dem Arm eines Benutzers über die Hand geschoben werden. Dies ist bei gleichzeitiger Verwendung von Datenhandschuhen oder Fingerfeedbackgeräten ungünstig. Ferner kann es zu Beschädigungen an den Feedbackgerät kommen, da beispielsweise die elastischen Bänder durch Überdehnung verschleißen können. Das vorbekannte Gerät deckt darüber hinaus die Hautoberfläche großflächig ab, so dass der Benutzer unter dem Gerät verstärkt schwitzen kann. Die Verkabelung zwischen den einzelnen Segmenten muss manuell an den jeweiligen Armdurchmesser angepasst werden.

Daher ist die Handhabung des vorbekannten Feedback-Gerätes sehr aufwändig.

Durch die Verwendung des elastischen Bandes in der vorbekannten Form ist darüber hinaus der Grad der Dehnung des vorbekannten Gerätes begrenzt, so dass eine Anpassung an Arme unterschiedlicher Personen nur bedingt möglich ist.

Es ist daher die Aufgabe der vorliegenden Erfindung, ein Feedback-Gerät, insbesondere für Virtual Reality, bereitzustellen, das eine hohe Dehnbarkeit besitzt, um an unterschiedliche Durchmesser von Körperteilen des menschlichen Körpers anpassbar zu sein, wobei möglichst gewährleistet sein soll, dass sich die Abstände zwischen den einzelnen Feedbackmodulen bei der Dehnung gleichmäßig anpassen.

Zur Lösung der Aufgabe dienen die Merkmale des Anspruchs 1.

Erfindungsgemäß ist beim Feedback-Gerät, insbesondere für Virtual Reality, zur Anbringung an Körperteilen des menschlichen Körpers, vorzugsweise ein vibrotaktiles Feedback-Gerät, mit einer einen Ring bildenden Befestigungsvorrichtung und mit mehreren Feedbackmodulen, die an der Befestigungsvorrichtung voneinander beabstandet befestigt und untereinander elektrisch verbunden sind, vorgesehen, dass die Befestigungsvorrichtung mehrere Zwischenelemente aufweist, die zwischen den Feedbackmodulen angeordnet sind, wobei die Feedbackmodule und die Zwischenelemente alternierend in einer Reihe angeordnet sind. Dabei weist die Befestigungsvorrichtung mindestens zwei elastisch dehnbare Bänder auf, die zumindest einen Teil der Zwischenelemente und der Feedbackmodule miteinander verbinden, wobei die elastischen dehnbaren Bänder gegenläufig in einem Zick-Zack-Verlauf geführt sind.

Durch das Vorsehen einer Befestigungsvorrichtung, die mindestens zwei elastisch dehnbare Bänder aufweist, die gegenläufig in einem Zick-Zack-Verlauf geführt sind, ist eine besonders große Dehnung des Virtual-Reality-Feedback-Gerätes möglich. Im Vergleich zu einer geraden Führung eines elastischen Bandes gemäß dem Stand der Technik kann durch den Zick-Zack-Verlauf die Befestigungsvorrichtung ein elastisch dehnbares Band größerer Länge aufweisen, ohne dass sich dadurch die Gesamtlänge der Befestigungsvorrichtung vergrößert.

Es hat sich herausgestellt, dass beispielsweise bei einer Länge von 15 cm im entspannten Zustand eine Längendehnung von bis zu 46 cm möglich ist. Bei einer geraden Führung der Bänder ist im Vergleich nur eine Dehnung bis beispielsweise maximal 33 cm möglich.

Durch die Verwendung von mindestens zwei elastischen dehnbaren Bändern können diese relativ dünn gehalten werden, so dass eine geringere Fläche der Haut durch das Feedback-Gerät abgedeckt wird als bei den aus dem Stand der Technik bekannten Geräte und somit der Nutzer weniger zum Schwitzen neigt.

Die erfindungsgemäß vorgesehenen Zwischenelemente ermöglichen einen gleichmäßigen Zick-Zack-Verlauf der elastisch dehnbaren Bänder, so dass die elastisch dehnbaren Bänder in gleicher oder ähnlicher Art zu den Feedbackmodulen verlaufen und an diesen angreifen. Somit kann gewährleistet werden, dass bei unterschiedlichen Dehnungszuständen des Feedback-Gerätes die Abstände zwischen den einzelnen Feedbackmodulen gleichmäßig sind.

Daher kann das erfindungsgemäße Feedback-Gerät von Nutzern mit unterschiedlichen Arm- oder Beindurchmessern verwendet werden, wobei die von den Feedbackmodulen ausgeübten Impulse von den unterschiedlichen Nutzern in gleicher oder ähnlicher Weise wahrgenommen werden. Bei der Erfindung ist vorgesehen, dass zwei elastisch dehnbare Bänder alle Zwischenelemente und Feedbackmodule miteinander verbinden. Durch das Vorsehen von zwei elastisch dehnbaren Bändern, die alle Zwischenelemente und Feedbackmodule miteinander verbinden, kann das erfindungsgemäße Feedback-Gerät auf konstruktiv einfache Art und Weise bereitgestellt werden. Darüber hinaus kann durch die Verwendung von zwei elastisch dehnbaren Bändern gewährleistet werden, dass eine gleichmäßige Dehnung der Bänder erfolgt, wodurch auf einfache Art und Weise verwirklicht werden kann, dass bei unterschiedlichen Dehnungszuständen der Abstand zwischen den Feedbackmodulen gleichmäßig ist.

In einem Ausführungsbeispiel der Erfindung kann vorgesehen sein, dass die Zwischenelemente breiter ausgebildet sind als die Feedbackmodule, wobei die elastisch dehnbaren Bänder zur Bildung des Zick-Zack-Verlaufs von ersten Führungselementen, die an den Feedbackmodulen angeordnet sind und zweiten Führungselementen, die am äußeren Randbereich der Zwischenelemente angeordnet sind, geführt sind. Alternativ kann vorgesehen sein, dass die Feedbackmodule breiter ausgebildet sind als die Zwischenelemente, wobei die elastisch dehnbaren Bänder zur Bildung des Zick-Zack-Verlaufs von ersten Führungselementen, die am äußeren Randbereich der Feedbackmodule angeordnet sind und zweiten Führungselementen, die an den Zwischenelementen angeordnet sind, geführt sind.

Durch eine derartige Ausgestaltung der Zwischenelemente und Feedbackmodule ist die Anordnung der dehnbaren Bändern im Zick-Zack-Verlauf auf konstruktiv einfache Art und Weise herstellbar.

Die ersten Führungselemente können dabei die elastisch dehnbaren Bänder an den Feedbackmodulen fixieren. Auch kann vorgesehen sein, dass die zweiten Führungselemente die elastisch dehnbaren Bänder an den Zwischenelementen fixieren.

In einem bevorzugten Ausführungsbeispiel der Erfindung ist vorgesehen, dass die Befestigungsvorrichtung ein Verschlusselement aufweist, wobei das Verschlusselement vorzugsweise die gleiche Erstreckung in Längsrichtung der Befestigungsvorrichtung aufweist wie ein Zwischenelement oder ein Feedbackmodul.

Durch das Vorsehen eines Verschlusselementes an der Befestigungsvorrichtung kann die Befestigungsvorrichtung geöffnet werden, so dass das erfindungsgemäße Feedback-Gerät auf einfache Art und Weise um ein Körperteil des Nutzers gelegt werden kann. Dadurch muss das erfindungsgemäße Feedback-Gerät nicht beispielsweise über die Hand des Nutzers gestreift werden, was insbesondere bei der gleichzeitigen Nutzung eines Datenhandschuhs von Vorteil ist, da dieser beim Anlegen des erfindungsgemäßen Feedback-Gerätes nicht vorher ausgezogen werden muss. Dadurch, dass vorgesehen sein kann, dass das Verschlusselement in Längsrichtung der Befestigungsvorrichtung die gleiche Erstreckung aufweist wie ein Zwischenelement oder ein Feedbackmodul, kann gewährleistet werden, dass trotz des Vorsehens eines Verschlusses eine gleichmäßige Dehnung der Befestigungsvorrichtung und somit ein gleichmäßiger Abstand der Feedbackmodule gewährleistet wird.

Dabei kann vorgesehen sein, dass das Verschlusselement zweiteilig ausgebildet ist, wobei an dem Verschlusselement vorzugsweise Befestigungselemente für die elastisch dehnbaren Bänder angeordnet sind und der Abstand zwischen dem Befestigungselement dem Abstand der ersten oder der zweiten Führungselemente entspricht. Durch die zweiteilige Ausbildung des Verschlusses ist das Öffnen und Verschließen des Verschlusses auf besonders einfache Art und Weise möglich, da die beiden Teile des Verschlusselementes lediglich auseinander genommen bzw. zusammengesetzt werden müssen. Dadurch, dass Befestigungselemente für die elastisch dehnbaren Bänder an dem Verschlusselement vorgesehen sein können, wobei der Abstand zwischen dem Befestigungselement und dem Abstand der ersten oder der zweiten Führungselemente entspricht, kann der erfindungsgemäß vorgesehene Zick-Zack-Verlauf der elastisch dehnbaren Bänder auch mit Verschlusselement gewährleistet werden.

In einem Ausführungsbeispiel der Erfindung kann vorgesehen sein, dass die zweiten Führungselemente als Hakenelemente ausgebildet sind. Dadurch wird ermöglicht, dass die elastisch dehnbaren Bänder aus den zweiten Führungselementen an den Zwischenelementen ausgehakt werden können, so dass auch ein gerader Verlauf der elastisch dehnbaren Bänder möglich ist. Auf diese Weise wird die Dehnbarkeit der Befestigungsvorrichtung des erfindungsgemäßen Feedback-Gerätes weiter erhöht. Bei dem zuvor beschriebenen Ausführungsbeispiel, bei dem das Gerät im entspannten Zustand eine Länge von 15 cm und im gedehnten Zustand eine Länge von 46 cm aufweist, kann durch das Aushängen der elastisch dehnbaren Bänder aus den zweiten Führungselementen eine weitere Längenausdehnung erreicht werden, so dass das Gerät bis zu einer Länge von 52 cm gedehnt werden kann. Dadurch wird der Einsatzbereich, bei dem das erfindungsgemäße Feedback-Gerät verwendet werden kann, erweitert, da beispielsweise ein erfindungsgemäßes Feedback-Gerät nicht nur am Unterarm oder im Knöchelbereich einsetzbar ist, sondern das gleiche Gerät kann beispielsweise auch am Oberarm getragen werden, da eine entsprechende Längendehnung der Befestigungsvorrichtung möglich ist.

Erfindungsgemäß kann vorgesehen sein, dass die elastisch dehnbaren Bänder Gummibänder sind. Derartige Bänder haben sich als vorteilhaft herausgestellt, wobei Gummibänder darüber hinaus relativ dünn hergestellt werden können, so dass nur eine geringe Oberfläche der Haut des Nutzers beim Tragen durch die Bänder abgedeckt wird.

Erfindungsgemäß kann vorgesehen sein, dass bei jedem Dehnungszustand der elastisch dehnbaren Bänder die Abstände zwischen den Feedbackmodulen gleichmäßig sind. Auch kann vorgesehen sein, dass bei jedem Dehnungszustand der elastisch dehnbaren Bänder die Zwischenelemente mittig zwischen den Feedbackmodulen angeordnet sind.

Dadurch kann gewährleistet werden, dass die von dem erfindungsgemäßen Feedback-Gerät ausgehenden Impulse gleichmäßig und für unterschiedliche Nutzer in gleicher oder ähnlicher Art und Weise wahrnehmbar auf dem Nutzer übertragen werden.

In einem bevorzugten Ausführungsbeispiel der Erfindung ist vorgesehen, dass mindestens ein Kabel die Feedbackmodule elektrisch verbindet, wobei die Zwischenelemente Kabelführungen aufweisen, über die das Kabel vorzugsweise mäanderförmig zwischen den Feedbackmodulen führbar ist. Durch das Vorsehen eines derartigen Kabels und einer Kabelführung an den Zwischenelementen können die Feedbackmodule dauerhaft miteinander verbunden sein, wobei auch bei einer Dehnung der Befestigungsvorrichtung die elektrische Verbindung zwischen den Feedbackmodulen gewährleistet ist.

Dabei kann vorgesehen sein, dass das mindestens eine Kabel mit hochelastischem Kunststoff ummantelt ist. Dadurch kann gewährleistet werden, dass das Kabel häufige Dehnungen der Befestigungsvorrichtung schadlos überstehen kann.

Vorzugsweise ist vorgesehen, dass die Feedbackmodule Vibrationsmotorenmodule sind.

In einem Ausführungsbeispiel der Erfindung weist das Feedback-Gerät eine Steuerungseinheit zur Steuerung der Feedbackmodule auf, wobei die Steuerungseinheit vorzugsweise an einem Feedbackmodul und einem Zwischenelement angeordnet ist. Über die Steuerungseinheit sind die Feedbackmodule auf einfache Art und Weise steuerbar.

Die Steuerungseinheit kann beispielsweise eine Funkdatenübertragung zu einer Recheneinheit aufweisen, so dass keine Kabelverbindung zu dem Feedback-Gerät notwendig ist. Darüber hinaus kann die Steuerungseinheit eine Energieversorgung für die Feedbackmodule aufweisen.

Im Folgenden wird unter Bezugnahme auf die nachfolgenden Figuren die Erfindung näher erläutert. Es zeigen:
- Fig. 1: eine schematische Perspektivansicht eines erfindungsgemäßen VirtualReality-Feedback-Gerätes und
- Fig. 2: eine schematische Darstellung eines erfindungsgemäßen VirtualReality-Feedback-Gerätes in drei unterschiedlichen Dehnungszuständen.

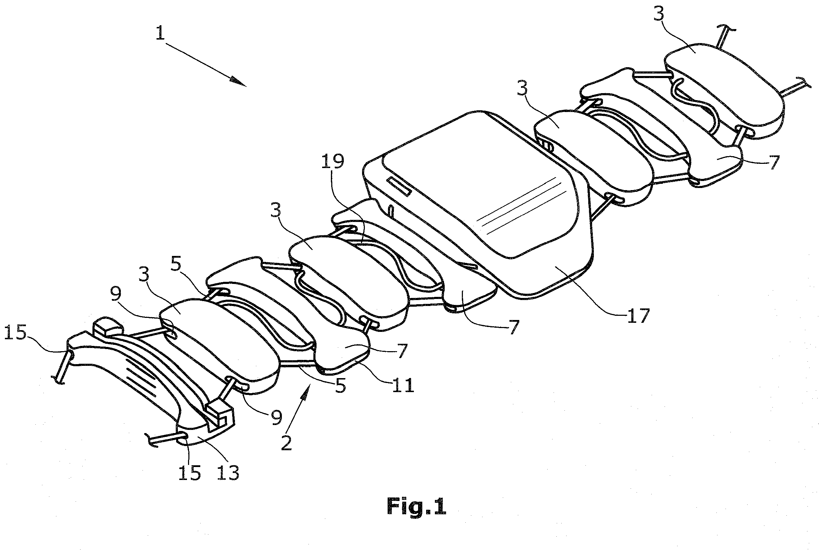

In Fig. 1 ist ein erfindungsgemäßes Virtual-Reality-Feedback-Gerät 1 schematisch in einer perspektivischen Ansicht dargestellt.

Das Virtual-Reality-Feedback-Gerät 1 weist zur Anbringung an Körperteilen des menschlichen Körpers eine Befestigungsvorrichtung 2 auf. An der Befestigungsvorrichtung 2 sind mehrere Feedbackmodule 3 voneinander beabstandet befestigt. Die Feedbackmodule 3 können beispielsweise einen Vibrationsmotor aufweisen, über den vibrotaktile Impulse an den Nutzer übertragen werden.

Die Befestigungsvorrichtung 2 weist zwei elastisch dehnbare Bänder 5 sowie Zwischenelemente 7 auf. Die Zwischenelemente 7 sind zwischen den Feedbackmodulen 3 platziert, so dass die Feedbackmodule 3 und die Zwischenelemente 7 alternierend in einer Reihe angeordnet sind.

Die elastisch dehnbaren Bänder 5 verbinden die Feedbackmodule 3 und die Zwischenelemente 7 miteinander, wobei die zwei elastisch dehnbaren Bänder 5 gegenläufig zueinander in einem Zick-Zack-Verlauf geführt sind.

Dazu sind an den Feedbackmodulen 3 erste Führungselemente 9 angeordnet sowie an den Zwischenelementen 7 zweite Führungselemente 11.

Über die ersten Führungselemente 9 sind die Feedbackmodule 3 an den elastischen Bändern 5 fixiert. Die zweiten Führungselemente 11 sind als Hakenelemente in Form von nach außen offenen Führungsnuten ausgebildet, in die die elastischen Bänder 5 gelegt bzw. eingehakt sind, wobei die Führungselemente 11 die Zwischenelemente 7 beispielsweise durch Klemmen fixieren.

Wie aus Fig. 1 ersichtlich ist, sind die Zwischenelemente 7 breiter ausgeführt als die Feedbackmodule 3, so dass durch das Vorsehen der zweiten Führungselemente im äußeren Bereich der Zwischenelemente 7 sich automatisch ein Zick-Zack-Verlauf der elastisch dehnbaren Bänder 5 ergibt.

Durch den Zick-Zack-Verlauf der elastisch dehnbaren Bänder ist eine besonders hohe Dehnbarkeit der Befestigungsvorrichtung 2 des erfindungsgemäßen Feedback-Gerätes 1 möglich.

Die zweiten Führungselemente 11 der Zwischenelemente 7 sind dabei so ausgeführt, dass die elastisch dehnbaren Bänder 5 aus den zweiten Führungselementen 11 ausgehakt werden können, so dass ein gerader Verlauf der elastisch dehnbaren Bänder 5 ermöglicht wird, wodurch die Dehnbarkeit der Befestigungsvorrichtung 2 weiter erhöht wird.

Die Befestigungsvorrichtung 2 weist ferner ein Verschlusselement 13 auf, über das die Befestigungsvorrichtung 2 geöffnet und zu einem Ring geschlossen werden kann. Das Verschlusselement 13 ist dabei zweiteilig ausgeführt, so dass diese auf eine einfache Art und Weise geöffnet und geschlossen werden kann. In dem in Fig. 1 dargestellten Ausführungsbeispiel ist das Verschlusselement 13 als Hakenverschluss ausgeführt. Selbstverständlich ist es auch möglich, dass das Verschlusselement 13 beispielsweise als Bügelverschluss oder Schnappverschluss ausgebildet ist.

Das Verschlusselement 13 ist von seinen Abmaßen her an die Zwischenelemente 7 angepasst, so dass das Verschlusselement 13 in Längsrichtung des Befestigungsmoduls die gleiche Erstreckung wie ein Zwischenelement 7 aufweist.

An dem Verschlusselement 13 sind Befestigungselemente 15 zur Befestigung der elastisch dehnbaren Bänder 5 angeordnet. Dabei ist der Abstand der Befestigungselemente 15 an den Abstand der zweiten Führungselemente 11 der Zwischenelemente 7 angepasst, so dass ein gleichmäßiger Zick-Zack-Verlauf der elastisch dehnbaren Bänder 5 gegeben ist. Dadurch kann gewährleistet werden, dass sich die Befestigungsvorrichtung 2 gleichmäßig ausdehnen kann und sich in den unterschiedlichen Dehnungszuständen der Befestigungsvorrichtung 2 ein gleichmäßiger Abstand zwischen den Feedbackmodulen ergibt.

Die elastisch dehnbaren Bänder 5 können beispielsweise Gummibänder sein. Gummibänder haben den Vorteil, dass diese bei hoher Beständigkeit und hoher Dehnbarkeit relativ dünn ausgeführt sein können, so dass die von der Befestigungsvorrichtung 2 eines erfindungsgemäßen Feedback-Gerätes 1 abgedeckte Hautfläche während des Tragens relativ gering ist und somit der Nutzer unter dem erfindungsgemäßen Feedback-Gerät 1 nicht zum übermäßigen Schwitzen neigt.

Das erfindungsgemäße Feedback-Gerät 1 weist ferner eine Steuerungseinheit 17 auf, die die Feedbackmodule 3 steuert. Dazu kann die Steuerungseinheit 17 eine Datenverbindung, beispielsweise eine drahtlose Datenverbindung zu einer externen Recheneinheit sowie eine Stromversorgung besitzen.

Die Steuerungseinheit 17 kann beispielsweise an einem Feedbackmodul 3 oder einem Zwischenelement 7 befestigt sein.

Die Steuerungseinheit 17 ist über ein Kabel 19 mit den Feedbackmodulen 3 verbunden. Dabei wird das Kabel 19, was beispielsweise mit einem hochelastischen Kunststoffmantel versehen sein kann, mäanderförmig geführt, so dass eine ausreichende Kabellänge vorhanden ist, um die Dehnungen der Befestigungsvorrichtung 2 durchzuführen. Für die mäanderförmige Führung sind an den Zwischenelementen 7 in Fig. 1 nicht dargestellte Kabelführungen angeordnet.

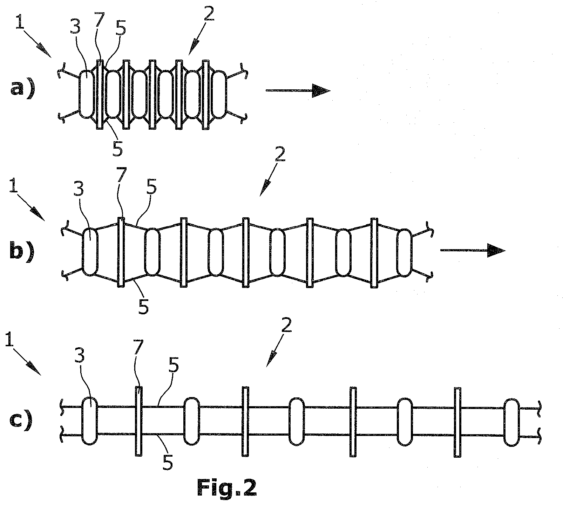

In Fig. 2 sind drei unterschiedliche Dehnungszustände des erfindungsgemäßen Feedback-Gerätes 1 schematisch in der Draufsicht dargestellt. Fig. 2 dient lediglich zu Erläuterungszwecken, so dass Details der Befestigungsvorrichtung 2 nicht dargestellt sind. Darüber hinaus ist die Verschlussvorrichtung 2 linear und nicht ringförmig gezeigt.

In Fig. 2a ist das erfindungsgemäße Feedback-Gerät 1 mit entspannter Befestigungsvorrichtung 2 gezeigt. Die Feedbackmodule 3 und die Zwischenelemente 7 sind eng aneinander angeordnet und die beiden elastisch dehnbaren Bänder 5 sind im gegenläufigen Zick-Zack-Verlauf angeordnet.

In Fig. 2b ist das erfindungsgemäße Feedback-Gerät 1 im gedehnten Zustand der Befestigungsvorrichtung 2 gezeigt. Wie aus Fig. 2b ersichtlich ist, weisen die Feedbackmodule 3 einen gleichmäßigen Abstand zueinander auf, wobei die Zwischenelemente 7 mittig zwischen den Feedbackmodulen 3 angeordnet sind. Der Zick-Zack-Verlauf der elastisch dehnbaren Bänder 5 ist durch die Dehnung flacher als in dem in Fig. 2a dargestellten Zustand.

In Fig. 2c ist das erfindungsgemäße Feedback-Gerät 1 in einem Zustand dargestellt, in dem die elastisch dehnbaren Bänder 5 aus den in Fig. 2 nicht dargestellten zweiten Führungselementen der Zwischenelemente 7 ausgehakt sind, so dass ein linearer Verlauf der elastisch dehnbaren Bänder 5 gegeben ist. Dadurch kann die Befestigungsvorrichtung 2 noch weiter gedehnt werden als es bei den in die zweiten Führungselemente eingehängten elastisch dehnbaren Bänder möglich ist.

Im ausgehakten Zustand werden die Zwischenelemente 7 über die in Fig. 2 nicht dargestellten Kabelverbindungen oder über ebenfalls in Fig. 2 nicht dargestellte weitere Führungselemente in Position gehalten.

Es hat sich herausgestellt, dass mit der erfindungsgemäßen Anordnung der Befestigungsvorrichtung eine Dehnbarkeit von beispielsweise bis zu 246 % erreicht werden kann.

## Patentansprüche

1. Feedback-Gerät (1) zur Anbringung an Körperteilen des menschlichen Körpers,
mit einer einen Ring bildenden Befestigungsvorrichtung (2) und
mit mehreren Feedbackmodulen (3), die an der Befestigungsvorrichtung (2) voneinander beabstandet befestigt und untereinander elektrisch verbunden sind,
**dadurch gekennzeichnet,**
**dass** die Befestigungsvorrichtung (2) mehrere Zwischenelemente (7) aufweist, die zwischen den Feedbackmodulen (3) angeordnet sind, wobei die Feedbackmodule (3) und die Zwischenelemente (7) alternierend in einer Reihe angeordnet sind, und
**dass** die Befestigungsvorrichtung (2) mindestens zwei elastisch dehnbare Bänder (5) aufweist, die zumindest einen Teil der Zwischenelemente (7) und der Feedbackmodule (3) miteinander verbinden, wobei die elastisch dehnbaren Bänder (5) gegenläufig und in einem Zick-Zack-Verlauf geführt sind.

2. Feedback-Gerät nach Anspruch 1, **dadurch gekennzeichnet, dass** zwei elastisch dehnbare Bänder (5) alle Zwischenelemente (7) und Feedbackmodule (3) miteinander verbinden.

3. Feedback-Gerät nach Anspruch 1 oder 2, **dadurch gekennzeichnet, dass** die Zwischenelemente (7) breiter ausgebildet sind als die Feedbackmodule (3), wobei die elastisch dehnbare Bänder (5) zur Bildung des Zick-Zack-Verlaufs von ersten Führungselementen (9), die an den Feedbackmodulen (3) angeordnet sind und zweiten Führungselementen (11), die am äußeren Randbereich der Zwischenelemente (7) angeordnet sind, geführt sind.

4. Feedback-Gerät nach Anspruch 1 oder 2, **dadurch gekennzeichnet, dass** die Feedbackmodule (3) breiter ausgebildet sind als die Zwischenelemente (7), wobei die elastisch dehnbare Bänder (5) zur Bildung des Zick-Zack-Verlaufs von ersten Führungselementen (9), die am äußeren Randbereich der Feedbackmodule (3) angeordnet sind und zweiten Führungselementen (11), die an den Zwischenelementen (7) angeordnet sind, geführt sind.

5. Feedback-Gerät nach einem der Ansprüche 1 bis 3, **dadurch gekennzeichnet, dass** die Befestigungsvorrichtung (2) ein Verschlusselement (13) aufweist, wobei das Verschlusselement (13) vorzugsweise die gleiche Erstreckung in Längsrichtung der Befestigungsvorrichtung (2) aufweist, wie ein Zwischenelement (7) oder ein Feedbackmodul (3).

6. Feedback-Gerät nach Anspruch 5, **dadurch gekennzeichnet, dass** Verschlusselement (13) zweiteilig ausgebildet ist, wobei an dem Verschlusselement (13) vorzugsweise Befestigungselemente (15) für die elastisch dehnbaren Bänder (5) angeordnet sind und der Abstand zwischen den Befestigungselementen (15) dem Abstand der ersten oder der zweiten Führungselemente (9,11) entspricht.

7. Feedback-Gerät nach einem der Ansprüche 3 bis 6, **dadurch gekennzeichnet, dass** die zweiten Führungselemente (11) als Hakenelemente ausgebildet sind.

8. Feedback-Gerät nach einem der Ansprüche 1 bis 7, **dadurch gekennzeichnet, dass** die elastisch dehnbaren Bänder (5) Gummibänder sind.

9. Feedback-Gerät nach einem der Ansprüche 1 bis 8, **dadurch gekennzeichnet, dass** bei jedem Dehnungszustand der elastisch dehnbaren Bänder (5) die Abstände zwischen den Feedbackmodulen (3) gleichmäßig sind.

10. Feedback-Gerät nach einem der Ansprüche 1 bis 9, **dadurch gekennzeichnet, dass** bei jedem Dehnungszustand der elastisch dehnbaren Bänder (5) die Zwischenelemente (7) mittig zwischen den Feedbackmodulen (3) angeordnet sind.

11. Feedback-Gerät nach einem der Ansprüche 1 bis 10, **dadurch gekennzeichnet, dass** mindestens ein Kabel (19) die Feedbackmodule (3) elektrisch verbindet, wobei die Zwischenelemente (7) Kabelführungen aufweisen, über die das Kabel zwischen den Feedbackmodulen (3) führbar ist.

12. Feedback-Gerät nach Anspruch 11, **dadurch gekennzeichnet, dass** das mindestens eine Kabel (19) mit hochelastischen Kunststoff ummantelt ist.

13. Feedback-Gerät nach einem der Ansprüche 1 bis 12, **dadurch gekennzeichnet, dass** die Feedbackmodule (3) Vibrationsmotorenmodule sind.

14. Feedback-Gerät nach einem der Ansprüche 1 bis 12, **gekennzeichnet durch** eine Steuerungseinheit (17) zur Steuerung der Feedbackmodule (3), wobei die Steuerungseinheit (17) an einem Feedbackmodul (3) oder einem Zwischenelement (7) angeordnet ist.

## Claims

1. A feedback device (1) for attachment to body parts of the human body, comprising
a fastening device (2) forming a ring, and
a plurality of feedback modules (3) fastened at mutual intervals on the fastening device (2) and electrically connected to each other,
**characterized in**
**that** the fastening device (2) comprises a plurality of intermediate elements (7) arranged between the feedback modules (3), wherein the feedback modules (3) and the intermediate elements (7) are alternately arranged in a row, and
**that** the fastening device (2) comprises at least two elastically stretchable bands (5) connecting at least a part of the intermediate elements (7) and of the feedback modules (3) to each other, wherein the elastically stretchable bands (5) are guided in opposite senses and along a zig-zag-shaped course.

2. The feedback device according to claim 1, **characterized in that** two elastically stretchable bands (5) connect all of the intermediate elements (7) and of the feedback modules (3) to each other.

3. The feedback device according to claim 1 or 2, **characterized in that** the intermediate elements (7) are dimensioned wider than the feedback modules (3), wherein the elastically stretchable bands (5) are guided to form the zig-zag-shaped course of first guide elements (9) arranged on the feedback modules (3) and of second guide elements (11) arranged on the outer edge region of the intermediate elements (7).

4. The feedback device according to claim 1 or 2, **characterized in that** the feedback modules (3) are dimensioned wider than the intermediate elements (7), wherein the elastically stretchable bands (5) are guided by first guide elements (9) arranged on the outer edge region of the feedback modules (3) and by second guide elements (11) arranged on the intermediate elements (7) to form the zig-zag-shaped course.

5. The feedback device according to any one of claims 1 to 3, **characterized in that** the fastening device (2) comprises a closure element (13), wherein the closure element (13) preferably has the same extension in the longitudinal direction of the fastening device (2) as an intermediate element (7) or a feedback module (3).

6. The feedback device according to claim 5, **characterized in that** the closure element (13) is of a two-part design, wherein the closure element (13) preferably has arranged on it fastening elements (15) for the elastically stretchable bands (5) and wherein the distance between the fastening elements (15) corresponds to the distance of the first or the second guide elements (9,11).

7. The feedback device according to any one of claims 3 to 6, **characterized in that** the second guide elements (11) are formed as hook elements.

8. The feedback device according to any one of claims 1 to 7, **characterized in that** the elastically stretchable bands (5) are rubber bands.

9. The feedback device according to any one of claims 1 to 8, **characterized in that**, in each stretching state of the elastically stretchable bands (5), the distances between the feedback modules (3) are uniform.

10. The feedback device according to any one of claims 1 to 9, **characterized in that**, in each stretching state of the elastically stretchable bands (5), the intermediate elements (7) are arranged centrally between the feedback modules (3).

11. The feedback device according to any one of claims 1 to 10, **characterized in that** at least one cable (19) electrically connects the feedback modules (3), wherein the intermediate elements (7) comprise cable guides via which the cable can be guided between the feedback modules (3).

12. The feedback device according to claim 11, **characterized in that** the at least one cable (19) is jacketed by highly elastic plastic.

13. The feedback device according to any one of claims 1 to 12, **characterized in that** the feedback modules (3) are vibration motor modules.

14. The feedback device according to any one of claims 1 to 12, **characterized by** a control unit (17) for control of the feedback modules (3), wherein the control unit (17) is arranged on a feedback module (3) or an intermediate element (7).

## Revendications

1. Appareil de génération d'information en retour (1) destiné à être fixé sur des parties d'un corps humain,
avec un dispositif de fixation (2) formant un anneau et
avec plusieurs modules de génération d'information en retour (3) qui sont fixés sur le dispositif de fixation (2) de façon espacée les uns des autres et qui sont reliés électriquement les uns aux autres,
**caractérisé**
**en ce que** le dispositif de fixation (2) comprend plusieurs éléments intermédiaires (7) qui sont disposés entre les modules de génération d'information en retour (3), les modules de génération d'information en retour (3) et les éléments intermédiaires (7) étant disposés en alternance en une ligne, et
**en ce que** le dispositif de fixation (2) comprend au moins deux bandes (5) élastiquement extensibles qui relient au moins une partie des éléments intermédiaires (7) et les modules de génération d'information en retour (3) les uns aux autres, les bandes (5) élastiquement extensibles étant guidées en sens inverses et en zigzag.

2. Appareil de génération d'information en retour selon la revendication 1, **caractérisé en ce que** deux bandes (5) élastiquement extensibles relient tous les éléments intermédiaires (7) et modules de génération d'information en retour (3) les uns aux autres.

3. Appareil de génération d'information en retour selon la revendication 1 ou 2, **caractérisé en ce que** les éléments intermédiaires (7) sont configurés plus large que les modules de génération d'information en retour (3), les bandes (5) élastiquement extensibles étant guidées, pour former l'agencement en zigzag, par des premiers éléments de guidage (9) disposés aux modules de génération d'information en retour (3) et des deuxièmes éléments de guidage (11) disposés dans la zone de bord extérieur des éléments intermédiaires (7).

4. Appareil de génération d'information en retour selon la revendication 1 ou 2, **caractérisé en ce que** les modules de génération d'information en retour (3) sont configurés plus large que les éléments intermédiaires (7), les bandes (5) élastiquement extensibles étant guidées, pour former l'agencement en zigzag, par des premiers éléments de guidage (9) disposés dans la zone de bord extérieur des modules de génération d'information en retour (3) et des deuxièmes éléments de guidage (11) disposés aux éléments intermédiaires (7).

5. Appareil de génération d'information en retour selon l'une des revendications 1 à 3, **caractérisé en ce que** le dispositif de fixation (2) comprend un élément fermoir (13), l'élément fermoir (13) présentant la même étendue dans la direction longitudinale de l'élément de fixation (2) qu'un élément intermédiaire (7) ou un module de génération d'information en retour (3).

6. Appareil de génération d'information en retour selon la revendication 5, **caractérisé en ce que** l'élément fermoir (13) est configuré en deux parties, de préférence, des éléments de fixation (15) pour les bandes (5) élastiquement extensibles étant disposés à l'élément fermoir (13) et la distance entre les éléments de fixation (15) correspondant à la distance entre les premiers ou les deuxièmes éléments de guidage (9, 11).

7. Appareil de génération d'information en retour selon une des revendications 3 à 6, **caractérisé en ce que** les deuxièmes éléments de guidage (11) sont configurés comme des éléments de crochets.

8. Appareil de génération d'information en retour selon l'une des revendications 1 à 7, **caractérisé en ce que** les bandes (5) élastiquement extensibles sont des élastiques en caoutchouc.

9. Appareil de génération d'information en retour selon l'une des revendications 1 à 8, **caractérisé en ce que** les distances entre les modules de génération d'information en retour (3) sont uniformes quel que soit l'état d'extension des bandes (5) élastiquement extensibles.

10. Appareil de génération d'information en retour selon l'une des revendications 1 à 9, **caractérisé en ce que** les éléments intermédiaires (7) sont disposés de façon centrée entre les modules de génération d'information en retour (3), quel que soit l'état d'extension des bandes (5) élastiquement extensibles.

11. Appareil de génération d'information en retour selon l'une des revendications 1 à 10, **caractérisé en ce qu'**au moins un câble (19) relie électriquement les modules de génération d'information en retour (3), les éléments intermédiaires (7) comprenant des conduits de câble par lesquels le câble peut être guidé entre les modules de génération d'information en retour (3).

12. Appareil de génération d'information en retour selon la revendication 11, **caractérisé en ce que** ledit au moins un câble (19) est enveloppé d'une matière synthétique hautement élastique.

13. Appareil de génération d'information en retour selon l'une des revendications 1 à 12, **caractérisé en ce que** les modules de génération d'information en retour (3) sont des modules à moteur vibrant.

14. Appareil de génération d'information en retour selon l'une des revendications 1 à 12, **caractérisé par** une unité de commande (17) pour la commande des modules de génération d'information en retour (3), l'unité de commande (17) étant disposée sur un module de génération d'information en retour (3) ou un élément intermédiaire (7).
